# EUROPÄISCHE PATENTANMELDUNG

(11) **EP 2 575 240 A2**
(43) Veröffentlichungstag der Anmeldung: **03.04.2013**
(21) Anmeldenummer: 12186011.8
(22) Anmeldetag: 26.09.2012
(51) Int. Cl.: H02K 5/22, H02K 7/116, H02K 7/00, H02K 11/00

(54) **Stellantrieb**

(30) Priorität: 27.09.2011 DE 102011053974
(71) Anmelder: Siko GmbH, 79256 Buchenbach (DE)
(72) Erfinder: Wandres, Horst, 79199 Kirchzarten (DE); Korch, Lothar, 79224 Umkirch (DE)
(74) Vertreter: Weiss, Peter

(57) **Zusammenfassung**

Bei einem Stellantrieb zur Durchführung von Verstell- und Positionieraufgaben an Anlagen und Maschinen im Industriebereich mittels eines Motors (3), der über ein Getriebe (4, 5) und eine Abgangswelle (7) mit einer Kundenwelle verbunden ist, und mit zumindest einem Anschluss (2) und einer Anschlussleitung (11), soll der Anschluss (2) und die Anschlussleitung (11) in Richtung auf die Abgangswelle (7) bzw. die Kundenwelle ausgerichtet sein.

## Beschreibung

Die Erfindung betrifft einen Stellantrieb zur Durchführung von Verstell- und Positionieraufgabe an Anlagen und Maschinen im Industriebereich mittels eines Motors, der über ein Getriebe- und eine Abgangswelle mit einer Kundenwelle verbunden ist, und mit zumindest einem Anschluss und einer Anschlussleitung.

### STAND DER TECHNIK

Stellantriebe sind in vielfältiger Form und Ausführung bekannt und auf dem Markt. Sie dienen in der Regel dazu, Verstell- und Positionieraufgaben an Anlagen und Maschinen im Industriebereich auszuführen. Aber auch für viele andere Anwendungen gibt es Stellantriebe. So zeigt beispielsweise die EP 1 803 912 A2 einen Stellantrieb allgemein für ein Stellorgan, der einen Stellmotor mit Motor - Abtriebswelle, eine das Stellorgan tragende Stellwelle und ein zwischen Motor - Abtriebswelle und Stellwelle angeordnetes Übersetzungsgetriebe sowie eine Rückstellvorrichtung zum Rückstellen des Stellorgans in eine Grundposition bei Ausfall des Stellmotors aufweist. Probleme bei diesen Stellmotoren beziehen sich vor allem auf die Ausgestaltung der Übersetzungsgetriebe, wofür in der Regel eine Mehrzahl von hintereinander geschalteten Planetengetrieben notwendig ist. Ferner dürfen derartige Stellantriebe so wenig wie möglich Raum in Anspruch nehmen.

Einen weiteren elektrischen Stellantrieb zeigt die EP 2 246 668 A1. Diese betrifft einen elektrischen Stellantrieb für mechanisch zu verstellende Einrichtungen, mit einem elektrischen Antriebsmotor und einer über einen Dreh - Stellbereich von mehr als 360° einstellbaren Abtriebswelle umfassend ein integriertes, berührungsloses Sensor - Winkelmesssystem zur Ermittlung und Rückmeldung der jeweiligen Drehstellung der Abtriebswelle. Auch hier sind wieder mehrere Getriebe nacheinander geschaltet, ferner benötigt dieser elektrische Stellantrieb relativ viel Bauraum.

### AUFGABE

Aufgabe der vorliegenden Erfindung ist es, einen Stellantrieb der o. g. Art zu schaffen, der möglichst klein gehalten werden kann und trotzdem sehr effizient ist.

### LÖSUNG DER AUFGABE

Zur Lösung der Aufgabe führt, dass der Anschluss und die Anschlussleitung in Richtung auf die Abgangswelle bzw. die Kundenwelle ausgerichtet sind.

Durch diese Anordnung ist es möglich, dass sich insbesondere die Anschlüsse aber auch zumindest Teile der Anschlussleitungen in einem geschützten und versteckten Bereich hinter dem Stellantrieb befinden und direkt zu der Einrichtung, die bedient werden soll, geführt werden können. Dadurch ist für diese Anschlüsse bzw. Anschlussleitungen kein zusätzlicher Bauraum notwendig. Der Einfachheit halber werden sie in einer Ecksicke aufgenommen, die von dem Gehäuse des Stellantriebs gebildet wird. Hierzu wird das Gehäuse in zwei Gehäuseteile aufgeteilt, die unterschiedliche Höhen aufweisen. Der vordere Gehäuseteil, in dem auch bevorzugt ein Display und die Bedientasten integriert sind, weist eine grössere Höhe auf, als ein hinterer, der Einrichtung zugewandter Gehäuseteil.

In dem zweiten Gehäuseteil mit der geringeren Höhe sind bevorzugt Motor, Getriebe und Abgangswelle integriert. Dabei soll erfindungsgemäss das Getriebe aus einem Wenigzahngetriebe bestehen, wie es beispielsweise in der DE 110 48 908 A1 beschrieben ist. Für die Verwendung eines derartigen Wenigzahngetriebes für einen Stellantrieb wird in der vorliegenden Erfindung auch gesondert Schutz begehrt. Der Vorteil des Wenigzahngetriebes ist, dass in der ersten Getriebestufe sehr hohe Übersetzungen realisiert werden, so dass i.V. zu herkömmlichen Planetengetrieben mindestens eine Stufe eingespart wird. Somit reduziert sich der Bauraum bei gleichzeitiger Erhöhung der Leistungsdichte. Bevorzugt handelt es sich in der ersten Getriebestufe um ein Zweizahngetriebe.

Bei den Anschlüssen, die versteckt in der Ecksicke des Gehäuses integriert sind, kann es sich um Spannungsanschlüsse aber insbesondere auch um Feldbus - Interfaces handeln. Hier ist aber der Erfindung keine Grenze gesetzt.

Gesondert Schutz begehrt wird auch dafür, dass die Abgangswelle als Hohlwelle ausgestaltet ist. Hierdurch ist es möglich, den erfindungsgemässen Stellantrieb jeder beliebigen Kundenwelle aufzusetzen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- **Figur 1**: eine Seitenansicht eines teilweise aufgebrochen dargestellten erfindungsgemässen Stellantriebs;
- **Figur 2**: eine Frontansicht des Stellantriebs gemäss Figur 1.

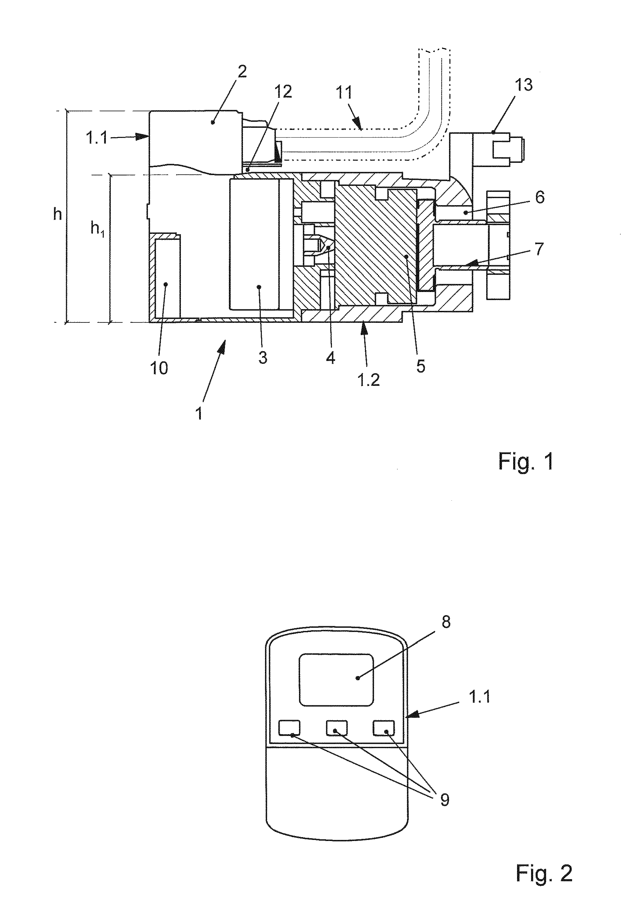

Ein erfindungsgemässer Stellantrieb weist gemäss Figur 1 ein Gehäuse 1 auf, welches einstückig ausgebildet sein kann oder aber aus mehreren Teilen besteht. Für die vorliegende Erfindung ist es wichtig, dass ein erstes Gehäuseteil 1.1 eine Höhe h aufweist, die grösser ist als eine Höhe h₁ eines zweiten Gehäuseteils 1.2. Hierdurch wird eine Ecksicke 12 ausgebildet, in der sich ein Anschluss 2 für eine Anschlussleitung 11 befindet, wobei der Anschluss 2 nach hinten ausgerichtet ist. Dadurch verschwinden Anschluss und Anschlussleitung 11 hinter dem ersten Gehäuseteil 1.1, so dass insgesamt die Bauform des Stellantriebs kompakter und kleiner gehalten werden kann. Zudem sind Anschluss 2 und Anschlussleitung 11 geschützter und führen schneller zu der zu bedienenden Anlage bzw. Maschine hin. Bei dem Anschluss 2 handelt es sich um einen Spannungsanschluss und/oder um ein Feldbus - Interface.

In dem ersten Gehäuseteil 1.1 ist ferner ein LCD-Display 8 integriert, der mit entsprechenden Tasten 9 für den manuellen Einrichtbetrieb bedient werden kann. Auf dem Display können unter anderem die aktuelle Ist- und Sollposition des Stellantriebs angezeigt werden.

In dem ersten Gehäuseteil 1.1 befindet sich vorteilhafterweise auch noch ein Batteriefach 10 und gegebenenfalls ein Controller und eine Leistungselektronik.

Im zweiten Gehäuseteil 1.2 sind ein Motor 3 mit einer Zweizahnwelle als Sonnerad 4, ein Planetengetriebe 5 und eine Abgangswelle 7 vorgesehen. Diese Abgangswelle 7 dreht in einem eigenen Lager 6. In diese Hohlwelle 7 kann eine Kundenwelle, zum Beispiel von einer Industriemaschine, die überwacht wird, verstellt oder positioniert werden soll, eingeschoben und festgelegt werden. Oberhalb der Hohlwelle 7 ist noch eine Fixierung 13 für den Stellantrieb erkennbar.

### Bezugszeichenliste

| | | | | | |
|---|---|---|---|---|---|
| 1 | Gehäuse | 34 | | 67 | |
| 2 | Anschluss | 35 | | 68 | |
| 3 | Motor | 36 | | 69 | |
| 4 | Sonnenrad | 37 | | 70 | |
| 5 | Planetengetriebe | 38 | | 71 | |
| 6 | Lager | 39 | | 72 | |
| 7 | Hohlwelle | 40 | | 73 | |
| 8 | Display | 41 | | 74 | |
| 9 | Tasten | 42 | | 75 | |
| 10 | Batteriefach | 43 | | 76 | |
| 11 | Anschlussleitung | 44 | | 77 | |
| 12 | Ecksicke | 45 | | 78 | |
| 13 | Fixierung | 46 | | 79 | |
| 14 | | 47 | | | |
| 15 | | 48 | | | |
| 16 | | 49 | | h | Höhe von 1.1 |
| 17 | | 50 | | h1 | Höhe von 1.2 |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Stellantrieb zur Durchführung von Verstell- und Positionieraufgaben an Anlagen und Maschinen im Industriebereich mittels eines Motors (3), der über ein Getriebe (4, 5) und eine Abgangswelle (7) mit einer Kundenwelle verbunden ist, und mit zumindest einem Anschluss (2) und einer Anschlussleitung (11),
**dadurch gekennzeichnet,**
**dass** der Anschluss (2) und die Anschlussleitung (11) in Richtung auf die Abgangswelle (7) bzw. die Kundenwelle ausgerichtet sind.

2. Stellantrieb zur Durchführung von Verstell- und Positionieraufgaben an Anlagen und Maschinen im Industriebereich mittels eines Motors (3), der über ein Getriebe (4, 5) und eine Abgangswelle (7) mit einer Kundenwelle verbunden ist, und mit zumindest einem Anschluss (2) und einer Anschlussleitung (11), **dadurch gekennzeichnet, dass** die Abgangswelle (7) als Hohlwelle ausgebildet ist.

3. Stellantrieb nach einem der Ansprüche 1 oder 2, **dadurch gekennzeichnet, dass** sich Motor (3), Getriebe (4, 5) und Abgangswelle (7) in einem Gehäuse (1) befinden.

4. Stellantrieb nach Anspruch 3, **dadurch gekennzeichnet, dass** in dem Gehäuse (1) eine Ecksicke (12) ausgebildet ist, in der sich der Anschluss (2) für die Anschlussleitung (11) befindet.

5. Stellantrieb nach Anspruch 4, **dadurch gekennzeichnet, dass** die Ecksicke (12) von zwei Gehäuseteilen (1.1, 1.2) gebildet ist, die eine unterschiedliche Höhe (h, h1) aufweisen.

6. Stellantrieb nach Anspruch 5, **dadurch gekennzeichnet, dass** sich in dem Gehäuseteil (1.1) mit der grösseren Höhe (h) ein Display (8) mit Bedienungstasten (9) sowie gegebenenfalls ein Batteriefach (10) befinden.

7. Stellantrieb nach Anspruch 5 oder 6, **dadurch gekennzeichnet, dass** sich Motor (3), Getriebe (4, 5) und Abgangswelle (7) in dem Gehäuseteil (1.2) mit der geringeren Höhe (h1) befinden.

8. Stellantrieb nach wenigstens einem der Ansprüche 1 - 7, **dadurch gekennzeichnet, dass** das Getriebe ein Wenigzahngetriebe ist.

9. Stellantrieb nach Anspruch 8, **dadurch gekennzeichnet, dass** das Wenigzahngetriebe ein Zweizahngetriebe (4) ist, auf das ein Planetengetriebe (5) folgt.

10. Stellantrieb nach wenigstens einem der Ansprüche 1 - 9, **dadurch gekennzeichnet, dass** der Anschluss (2) einen Feldbus - Interface umfasst.

11. Verwendung eines Wenigzahngetriebes bei der Übersetzung der Bewegung einer Motorabtriebswelle auf eine Kundenwelle, insbesondere in einem Stellantrieb.
